# FASCICULE DE BREVET EUROPEEN

(11) **EP 2 046 622 B1**
(45) Date de publication et mention de la délivrance du brevet: **03.11.2010**
(21) Numéro de dépôt: 07803985.6
(22) Date de dépôt: 06.07.2007
(51) Int. Cl.: B62D 1/20, F16D 1/112

(54) **DISPOSITIF DE LIAISON POUR SYSTEME DE DIRECTION**
VERBINDUNGSVORRICHTUNG FÜR EIN LENKSYSTEM
LINKAGE DEVICE FOR A STEERING SYSTEM

(30) Priorité: 02.08.2006 FR 0607066
(43) Date de publication de la demande: 15.04.2009
(73) Titulaire: Renault S.A.S., 92100 Boulogne-Billancourt (FR)
(72) Inventeur: CODANDAMOURTY, Mogan, 78150 Le Chesnay (FR); MENCARELLI, Franck, 78610 Le Perray En Yvelines (FR)
(86) Numéro de dépôt international: PCT/FR2007/051606
(87) Numéro de publication internationale: WO 2008/015352

(56) Documents cités:
- EP-A- 1 247 719
- EP-A1- 0 445 591
- EP-A1- 1 241 072
- US-B1- 6 739 790

## Description

L'invention concerne un dispositif de liaison permettant une transmission de mouvement entre deux pièces, et plus particulièrement un dispositif de liaison permettant une transmission de mouvement entre des moyens de commande et un boîtier de direction pour un système de direction d'un véhicule automobile.

Un tel dispositif selon le préambule de la revendication 1 est connu par le document US 6739790 B.

Un système de direction d'un véhicule automobile présente généralement des moyens de commande comportant un volant susceptible d'être entraîné en rotation par un conducteur et des moyens de liaison cinématique permettant de transmettre le mouvement du volant et de le transformer en une rotation correspondante des roues selon un axe vertical.

La transmission du mouvement imprimé par le conducteur définit un sens amont et un sens aval de la chaîne des moyens de liaison cinématique participant à la transmission du mouvement.

Les moyens de commande de direction comportent en particulier un volant et un arbre de direction logé dans une colonne de direction et lié solidairement par une première de ses extrémités au volant. Cet arbre de direction s'étend longitudinalement selon un axe de colonne autour duquel il est entraîné en rotation lorsque le volant tourne.

La transformation du mouvement de rotation imprimé au volant est assurée notamment par un boîtier de direction connu en soi. Un boîtier de direction comporte habituellement un pignon de crémaillère engrenant sur un barreau s'étendant le long d'un arbre transversal de direction. Un ensemble de biellettes et de liaisons pivots relie l'arbre transversal de direction aux portes fusées des roues et entraîne la rotation des roues lors de la translation de cet arbre transversal de direction.

En aval des moyens de commande et en amont du boîtier de direction, l'ensemble de direction comporte un dispositif de liaison.

Ce dispositif de liaison permet de transmettre le mouvement depuis les moyens de commande au boîtier de direction, et fait l'objet de la présente invention.

L'extrémité aval des moyens de commande liée au dispositif de liaison est désignée par la suite organe amont.

L'extrémité amont du boîtier de direction liée au dispositif de liaison est désignée par la suite organe aval.

Plusieurs solutions ont été proposées pour assurer une liaison entre les moyens de commande et le boîtier de direction.

Une première solution consiste à insérer un arbre porté par l'organe aval dans l'alésage d'une mâchoire liée à l'organe amont, l'insertion étant réalisée par une translation selon l'axe de l'alésage.

L'arbre et la mâchoire présentent respectivement une encoche ou une gorge et un trou débouchant, tous deux perpendiculaires à l'axe d'insertion. Dans une position relative prévue de l'arbre par rapport la mâchoire, désignée position de référence, l'encoche et le trou sont disposés en regard de manière à permettre l'insertion d'une vis.

Cette vis permet après insertion, de s'assurer que la mâchoire est correctement positionnée en rotation et en translation par rapport à l'arbre.

En effet, cette vis ne peut être introduite dans le trou et dans l'encoche que si l'arbre et la mâchoire sont dans la position de référence.

Cette vis ne permet cependant pas d'assurer un indexage dans le sens où elle ne participe pas au positionnement relatif des organes en rotation, mais se limite à permettre une vérification de ce positionnement après insertion.

Par conséquent, cette liaison n'offre pas une simplicité et une précision satisfaisantes de montage. Notamment elle implique une insertion de l'arbre dans la mâchoire préalablement au positionnement en rotation autour de l'axe de l'arbre.

Ainsi, en cas de positionnement incorrect en rotation suivi d'une insertion, il faut procéder à un désassemblage, puis à un réassemblage. De plus, après l'insertion de la mâchoire sur l'arbre et avant l'introduction de la vis il n'est pas aisé de vérifier ce positionnement en rotation. Or, sur une chaîne de production la séquence des étapes est primordiale et il est particulièrement dommageable de ne pas savoir si une étape a été réalisée avec succès.

En pratique, le montage d'une telle liaison nécessite donc la présence d'un opérateur supplémentaire pour la vérification, ou l'utilisation d'un appareillage de vérification coûteux afin de contrôler ce bon positionnement.

Par ailleurs, cette liaison ne permet pas d'assurer un positionnement en translation selon l'axe de l'arbre qui soit simple et fiable.

Cette solution ne permet donc pas un montage complet, simple, fiable et rapide de la liaison entre les organes amont et aval.

Ainsi, l'opérateur réalisant l'insertion ne peut être sûr du bon positionnement relatif en rotation et en translation.

Une autre solution prévoit d'ajouter sur le pignon une pièce additionnelle dite de guidage. Cette pièce de guidage a pour fonction de guider l'orientation de la mâchoire lors de son insertion sur l'arbre du pignon.

Cette solution présente également des inconvénients lourdement pénalisants.

En effet, la pièce de guidage est simplement clipsée sur le pignon et présente ainsi un fort risque de déclipsage lors des étapes de montage antérieures à l'assemblage de la mâchoire sur le pignon. Les temps d'exécution étant très courts et les pièces formant la liaison étant souvent masquées par d'autres éléments du véhicule, au moment de l'assemblage de la mâchoire sur le pignon, l'opérateur ne peut s'apercevoir de l'absence de la pièce de guidage. Le montage n'est donc plus réalisé de façon précise, ce qui entraîne les inconvénients précités.

En outre, la pièce de guidage est fragile et présente un risque important de rupture.

De plus, cette solution implique une augmentation des coûts liée à la pièce de guidage elle-même, ainsi qu'à l'outillage qu'elle nécessite pour son obtention.

Enfin, cette pièce demeure sur le pignon après le montage, bien que n'étant alors plus d'aucune utilité.

Enfin, d'autres solutions proposent une mâchoire en forme de chape et présentant une ouverture axiale dont la largeur transversale est supérieure à celle du pignon. La mâchoire est introduite sur le pignon à travers l'ouverture par une translation de direction perpendiculaire à l'axe commun entre les deux organes. Cette solution implique de sévères contraintes de conception au niveau des moyens de transmission du couple. Ainsi, les moyens de transmission du couple présentent alors une résistance à la fatigue limitée, ce qui induit avec le temps du jeu et du bruit.

Cette solution ne présente donc pas une sécurité et un confort de conduite satisfaisants.

L'invention vise à améliorer les dispositifs existants de liaison entre les moyens de commande et le boîtier de direction pour système de direction d'un véhicule.

Pour atteindre ces objectifs, il est prévu dans le cadre de la présente invention un dispositif de liaison entre des moyens de commande et un boîtier de direction pour système de direction d'un véhicule comportant un pignon associé au boîtier de direction et comprenant un arbre définissant un axe de pignon, une mâchoire associée à l'organe de direction et comportant une paroi amont, un alésage définissant un axe de mâchoire perpendiculaire à la paroi amont et dont les dimensions sont agencées de manière à permettre l'insertion de l'alésage sur l'arbre par coulissement selon un axe commun défini lorsque l'axe de pignon et l'axe de mâchoire sont coaxiaux, le dispositif comportant des moyens d'indexage, aptes à empêcher l'insertion de l'alésage sur l'arbre lorsque la mâchoire n'est pas correctement positionnée en rotation selon l'axe commun par rapport à l'arbre.

Lorsque la mâchoire est insérée sur le pignon le positionnement en rotation est ainsi forcement correct. Cette solution permet donc de simplifier considérablement le montage et de se passer de vérifications. De plus la liaison obtenue présente une grande robustesse.

Le dispositif de liaison selon l'invention pourra en outre présenter facultativement au moins l'une des caractéristiques suivantes :
- les moyens d'indexage comportent une clavette longitudinale s'étendant axialement sur le pignon depuis une paroi aval disposée à l'extrémité amont du pignon et sensiblement perpendiculairement à l'axe de pignon, la clavette étant agencée de manière à coopérer avec une rainure axiale portée par la mâchoire et débouchant sur la paroi amont.
- le dispositif comporte des moyens de mise et de maintien en position axiale de la mâchoire sur le pignon ces moyens comprenant :
   - une encoche ou une gorge portée par le pignon et s'étendant perpendiculairement à l'axe de pignon,
   - un trou disposé sur la mâchoire, perpendiculairement à l'axe de mâchoire agencé de manière à ce que dans une position relative de référence du pignon par rapport à la mâchoire, le trou soit au regard de l'encoche,
   - une vis ou une goupille traversant le trou et l'encoche dans la position de référence, de manière à former une butée double effet en translation selon l'axe principal,
- l'encoche forme une gorge annulaire,
- les moyens de mise et de maintien en position axiale comprennent un épaulement formé sur le pignon et destiné à coopérer avec la paroi amont de manière à former une butée simple en translation selon l'axe principal,
- le dispositif comporte des premiers et des seconds moyens de transmission de couple disposés respectivement sur le pignon et la mâchoire, et destinés à coopérer entre eux pour transmettre un couple selon l'axe commun entre la mâchoire et le pignon,
- les premiers et les seconds moyens de transmission de couple comportent des profils portant des cannelures complémentaires

s'étendant respectivement selon l'axe de pignon et selon l'axe de mâchoire,
- les premiers et seconds moyens de transmission d'un couple comportent respectivement au moins un méplat porté par l'arbre et au moins une paroi plane formée dans l'alésage, le méplat et la paroi plane étant disposés en regard lorsque la mâchoire et l'alésage sont dans une position relative de référence,
- la clavette est rapportée sur le pignon ou est venue de matière sur le pignon.

L'invention a également pour objet un procédé d'assemblage d'un dispositif de liaison selon la revendication dans lequel:
- on dispose sur un axe commun l'axe de pignon et l'axe de mâchoire,
- on insère par coulissement selon l'axe commun l'alésage sur l'arbre,
caractérisé en ce que préalablement à l'insertion par coulissement selon l'axe commun de l'alésage sur l'arbre, on oriente en rotation autour de l'axe principal la mâchoire de manière à positionner la rainure au regard de la clavette.

D'autres caractéristiques, buts et avantages de la présente invention apparaîtront à la lecture de la description détaillée qui va suivre, et en regard des dessins annexés, donnés à titre d'exemples non limitatifs et sur lesquels :
La figure 1, est une vue en perspective du pignon et de la mâchoire d'un dispositif selon l'invention.
La figure 2a et 2b sont des vues respectivement longitudinale et radiale du pignon de la figure 1.
La figure 2c et 2d sont des vues respectivement en coupe longitudinale et radiale de la mâchoire de la figure 1.
La figure 3a à 3e sont des vues longitudinales ou radiales de chacune des étapes permettant le montage complet entre la mâchoire et le pignon de la figure 1.

Pour rappel, une chaîne de moyens de liaison cinématique permet de transmettre et de transformer la rotation du volant en une rotation des roues du véhicule.

La transmission du mouvement le long de cette chaîne de moyens de liaison cinématique définit un sens aval et un sens amont.

Un dispositif de liaison appartenant à cette chaîne permet de transmettre le mouvement entre l'extrémité aval de moyens de commande, et l'extrémité amont d'un boîtier de direction du système de direction d'un véhicule.

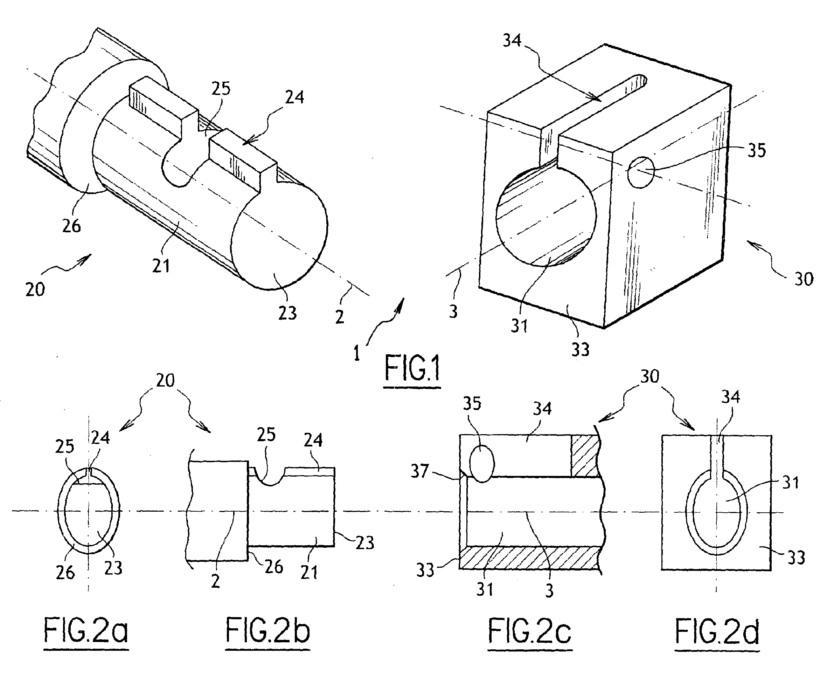

Un tel dispositif comporte un pignon et une mâchoire, illustrés en référence aux figures 1 à 2d.

Le pignon 20 est lié à l'extrémité amont d'un boîtier de direction, cette extrémité étant désignée par la suite organe aval.

Le pignon 20 comporte un arbre 21 définissant un axe 2 de pignon 20. L'extrémité amont de l'arbre 21 présente une face perpendiculaire à l'axe appelée par la suite paroi aval 23.

Le pignon 20 comprend également une clavette 24 s'étendant axialement sur la périphérie de l'arbre 21 depuis la paroi aval 23.

La clavette 24 présente une dimension principale, désignée longueur de clavette 24, s'étendant axialement vers l'aval depuis la paroi aval 23, et une dimension secondaire, appelée hauteur de clavette 24 s'étendant radialement depuis la périphérie de l'arbre 21. La dimension tangentielle de la clavette 24 dans un plan de coupe radial est désignée largeur de clavette 24.

Cette clavette 24 peut être rapportée sur l'arbre 21 ou être, de manière avantageuse, venue de matière sur l'arbre 21.

Le pignon 20 présente également une encoche 25 s'étendant perpendiculairement à l'axe du pignon 20. Cette encoche 25 est radialement disposée de manière à traverser la clavette 24.

Dans un premier mode de réalisation, la hauteur de clavette 24 est choisie de manière à ce que l'encoche 25 traverse la clavette 24 sur toute la hauteur de cette dernière. L'encoche 25 peut également s'étendre radialement en partie dans l'arbre 21. L'obtention d'une telle encoche 25 peut être obtenue par fraisage par exemple.

Dans un autre mode de réalisation, les dimensions relatives de la clavette 24 et de l'encoche 25 peuvent être prévues de manière à ce que l'encoche 25 soit radialement logée dans la clavette 24. L'encoche 25 forme ainsi un trou 35 débouchant de part et d'autre de la clavette 24.

Dans un autre mode de réalisation, l'encoche 25 s'étend sur toute la circonférence de l'arbre 21 de manière à former une gorge annulaire. Cette encoche 25 peut être réalisée par tournage ce qui permet une obtention particulièrement simple.

De manière avantageuse, le pignon 20 présente également une variation de diamètre formant un épaulement 26. Le diamètre d'une portion aval du pignon 20 est ainsi supérieur au diamètre d'une portion amont de l'arbre 21.

La mâchoire est liée à l'extrémité aval des moyens de commande de direction, cette extrémité étant désignée par la suite organe amont.

La mâchoire 30 comporte un alésage 31 définissant un axe 3 de mâchoire 30. L'extrémité aval de l'alésage 31 présente une face perpendiculaire à l'axe appelée par la suite paroi amont 33.

De manière avantageuse, l'extrémité aval de l'alésage comporte un chanfrein 37.

La mâchoire 30 comprend également une rainure 34 présentant une dimension principale désignée longueur de rainure 34 s'étendant axialement vers l'amont depuis la paroi amont 33, et une dimension secondaire appelée hauteur de rainure 34 s'étendant radialement depuis la périphérie de l'alésage 31.

La dimension tangentielle de la rainure 34 dans un plan de coupe radial est appelée largeur de rainure 34.

La mâchoire 30 présente également un trou 35 débouchant s'étendant perpendiculairement à l'axe du pignon 20. Ce trou 35 est radialement disposé de manière à traverser la rainure 34.

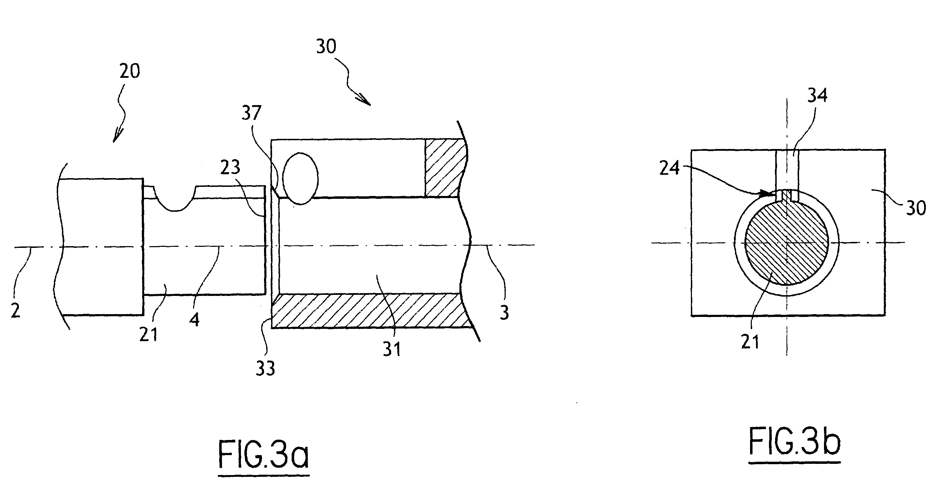

En référence aux figures 3a à 3e on a illustré les différentes étapes de montage de la mâchoire 30 sur le pignon 20 de manière à former une liaison. Dans l'exemple de réalisation décrit par la suite, on considère que lors du montage de la liaison, l'extrémité amont du boîtier de direction est immobile par rapport à la caisse et que l'extrémité aval des moyens de commande peut être déplacée. L'inverse est bien évidemment également envisageable et reçoit également pour application les enseignements de la présente invention.

Comme l'indique la figure 3a, la mâchoire 30 et le pignon 20 sont positionnés l'un par rapport à l'autre de manière à ce que leur axe respectif 2, 3 soient situés sur un même axe 4. Cet axe est désigné par la suite axe commun 4.

De plus, la mâchoire 30 et le pignon 20 sont disposés de sorte que les parois amont 33 et aval 23 soient au regard.

Cette position relative de la mâchoire 30 et du pignon 20 est appelée position de présentation.

La figure 3b illustre le positionnement en rotation de la mâchoire 30 par rapport au pignon 20 depuis la position de présentation.

Dans cette étape la mâchoire 30 est positionnée en rotation de manière à ce que l'extrémité aval de la rainure 34 soit disposée au regard de l'extrémité amont de la clavette 24.

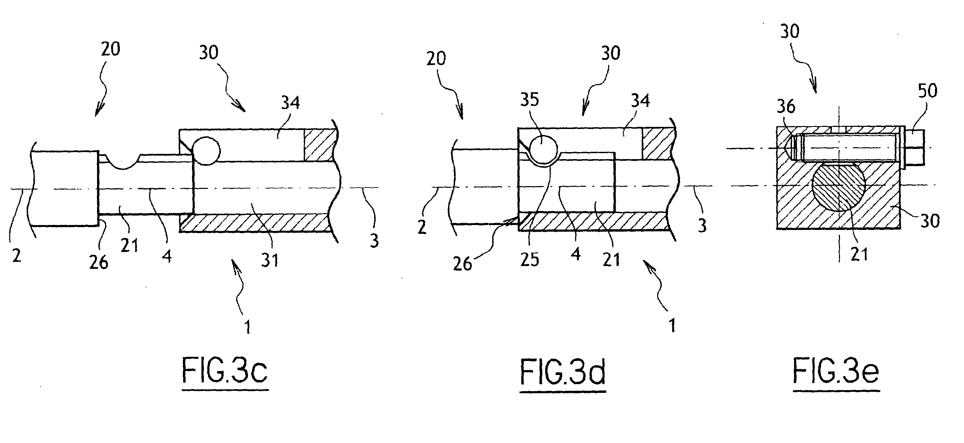

La figure 3c illustre l'insertion de la mâchoire 30 sur l'arbre 21. Cette insertion est facilitée par le profil chanfreiné 37 de l'extrémité aval de l'alésage 31.

Les largeurs respectives de la clavette 24 et de la rainure 34 sont telles qu'elles permettent une insertion de la clavette 24 dans la rainure 34. De plus, les diamètres respectifs de l'arbre 21 et de l'alésage 31 sont tels qu'ils permettent une insertion de l'alésage 31 sur l'arbre 21.

Cette insertion est possible uniquement si le positionnement en rotation est effectué correctement. En effet, si le positionnement en rotation est incorrect, la clavette 24 n'est pas disposée au regard de la rainure 34 et vient alors en butée sur la paroi amont 33 lorsque les parois amont 33 et aval 23 sont sensiblement dans un même plan. L'insertion de la mâchoire 30 sur le pignon 20 est alors impossible.

Cet agencement spécifique de la clavette 24 et de la rainure 34 permet un indexage en rotation selon l'axe commun 4. Dans la présente demande, le terme indexage désigne un positionnement en rotation de la mâchoire par rapport à l'arbre selon l'axe commun 4.

Un opérateur ou un système automatisé, en effectuant une rotation de la mâchoire 30 selon l'axe commun 4 et en exerçant une légère pression axiale de la mâchoire 30 sur le pignon 20 positionnera irrémédiablement la rainure 34 au regard de la clavette 24 ce qui autorise l'insertion de la clavette 24 dans la rainure 34 sous l'effet de la légère pression axiale.

Le dispositif 1 autorise un tel positionnement même si l'opérateur n'a pas une bonne visibilité du pignon 20 et de la mâchoire 30.

De plus, cette combinaison assure également le maintien de ce positionnement en rotation. En effet, la clavette 24 insérée dans la rainure 34 forme une butée double effet en rotation selon l'axe commun 4.

Ainsi, ce dispositif 1 permet d'assurer que le positionnement en rotation est correct dès lors que l'insertion est initiée. Cette caractéristique particulière offre une sécurité et une simplicité de montage particulièrement appréciables dans un environnement où la visibilité est réduite et où les contraintes de productivité sont importantes. En effet, ce dispositif de liaison permet de réduire considérablement les temps d'assemblage et les erreurs de montage.

De plus, ce dispositif 1 permet de se passer de tout système de vérification du positionnement en rotation. Le positionnement en rotation est donc effectué de façon complète par le dispositif 1 de liaison.

Les longueurs et les diamètres respectifs de l'arbre 21 et de l'alésage 31 ainsi que leurs ajustements relatifs éliminent les deux degrés de liberté en rotation autour d'axe perpendiculaires à l'axe commun 4 et deux degrés de liberté en translation selon des directions perpendiculaires à celle de l'axe commun 4.

Les largeurs respectives de la clavette 24 et de la rainure 34 ainsi que leurs ajustements relatifs suppriment le degré de liberté en translation restant.

De manière avantageuse, le pignon 20 présente un épaulement 26. Cet épaulement 26 vient en butée sur la paroi amont 33 lors de l'insertion de l'alésage 31 sur l'arbre 21 comme l'illustre la figure 3d. Ainsi, cet épaulement 26 permet un arrêt en translation de la mâchoire 30 par rapport au pignon 20.

La disposition de l'épaulement 26 par rapport à l'encoche 25 est agencée de manière à ce que lorsque cet épaulement 26 vient en butée, l'encoche 25 est située au regard du trou 35 porté par la mâchoire 30.

La mâchoire 30 et le pignon 20 sont donc disposés dans la position relative prévue selon tous les degrés de liberté, cette position étant désignée position de référence.

Les dimensions relatives du trou 35 et de l'encoche 25 sont telles qu'elles permettent d'accueillir un élément transversal coaxial au trou 35, comme par exemple une vis 50 ou une goupille.

Ce trou 35 peut être débouchant ou borgne. Dans le cas où une vis 50 est insérée, un assemblage vis-écrou peut être prévu si le trou 35 est débouchant. Si le trou 35 est borgne ou débouchant, une portion filetée ou taraudée 36 peut être prévue dans le trou 35 afin de recevoir la vis 50, comme le représente la figure 3e. Le serrage de la vis 50 assure un maintien en position de la liaison.

Dans le cas d'un trou débouchant, pour empêcher que la vis 50 ne soit montée dans le mauvais sens, c'est-à-dire qu'elle soit introduite dans la mâchoire 31 par la portion taraudée 36 et non par la trou de passage, il est préférable de prévoir une pièce supplémentaire faisant office de bouchon. Cette pièce supplémentaire obture l'extrémité tournée vers l'extérieur de la portion taraudée 36 et empêche ainsi l'introduction de la vis 50 par cette même extrémité.

Une solution alternative à l'utilisation d'un bouchon consiste à prévoir un écrasement local de la matière au niveau use l'extrémité tournée vers l'extérieur de la portion taraudée 36. Cet écrasement permet également d'empêcher l'introduction de la vis 50 par cette même extrémité.

Un trou borgne présente l'avantage que le montage de la vis 50 est forcement effectué dans le sens souhaité et ne nécessite ni étapes de production ni pièces supplémentaires.

Ces solutions permettent de réduire les risques d'erreur lors du montage de la liaison.

L'élément transversal forme une butée axiale double effet en translation selon l'axe commun. En effet, la clavette 24 vient en butée sur cet élément lorsque l'arbre 21 est sollicité en translation selon l'axe commun par rapport à l'alésage 31 dans un sens ou dans l'autre.

Cet élément transversal permet de supprimer le degré de liberté en translation restant.

De manière préférée, le trou 35 est situé de manière à interférer avec la zone chanfreinée 37 de l'extrémité aval de l'alésage 31.

Ainsi, dès qu'est initiée l'introduction de l'arbre 21 dans la mâchoire 30, l'insertion de l'élément transversal 50 est impossible tant que l'arbre n'est pas inséré jusqu'à la position de référence. En effet, dès que l'extrémité amont 23 de l'arbre 21 se trouve dans la zone chanfreinée 37, elle interfère avec le trou 35 ce qui empêche de monter l'élément transversal 50.

De plus, si l'élément transversal 50 est monté dans le trou 35 avant que l'arbre 21 ne soit introduit dans l'alésage 31, l'extrémité amont 23 de l'alésage entre en butée avec cet élément transversal 50 au niveau de la zone chanfreinée 37. Ainsi situé, l'élément transversal 50 forme une butée empêchant l'insertion de l'arbre 21 au-delà de cette zone chanfreinée 37. Or, dans cette zone, l'arbre 21 ne peut être ni maintenu, ni serré.

Ce positionnement particulier du trou 35, qui interfère avec la zone chanfreinée 37, permet donc de supprimer les risques de montage de l'élément transversal 50 alors que l'arbre n'est pas correctement introduit dans l'alésage 31 jusqu'à la position de référence.

Les risques d'erreur de montage de cette liaison sont donc sensiblement diminués.

Enfin la transmission du couple selon l'axe commun 4 est assurée par des profils complémentaires portés respectivement par l'arbre 21 et l'alésage 31.

Dans un premier mode de réalisation ces profils complémentaires sont des profils cannelés. Ce type de profil permet de transmettre un couple élevé et diminue les risques de matage des deux profils au cours du temps.

Dans un second mode de réalisation ces profils complémentaires comprennent au moins un méplat porté par l'arbre 21 et disposé au regard d'une paroi plane portée par la mâchoire 30 et situé dans l'alésage 31. Avantageusement, les profils complémentaires comportent deux méplats et deux parois planes, respectivement disposés de part et d'autre de l'axe commun, sur un même diamètre.

Le dispositif selon cet exemple permet donc d'obtenir un montage complet, c'est-à-dire un montage assurant un positionnement correct selon les six degrés de liberté et un maintien dans cette position de référence.

Ce montage complet ne nécessite pas de vérification ou de contrôle et supprime toute opération de démontage due à un positionnement incorrect. Ainsi, les temps nécessaires à de telles vérifications ainsi que les coûts induits par ces vérifications sont supprimés.

Avantageusement, ce dispositif permet d'améliorer sensiblement la sécurité puisque le positionnement relatif des moyens de commande et du boîtier de direction est forcement respecté.

En outre, ce dispositif présente des avantages en terme de simplicité de montage de la liaison et permet donc de réduire sensiblement les temps et les erreurs de montage, et diminue par conséquent les coûts de production.

Par ailleurs l'obtention de la mâchoire et du pignon est simple, ce qui réduit les coûts de production de ces pièces.

De manière avantageuse, la liaison obtenue est robuste et présente une tenue améliorée.

Enfin, ce dispositif ne nécessite pas de pièce spécifique pour réaliser le positionnement de la mâchoire sur le pignon.

## Revendications

1. Dispositif (1) de liaison entre des moyens de commande de direction et un boîtier de direction pour système de direction d'un véhicule comportant :
- un pignon (20) associé au boîtier de direction et comprenant :
- un arbre (21) définissant un axe de pignon (20)
- une mâchoire (30) associée à l'organe de direction et comportant :
- une paroi amont (33)
- un alésage (31) définissant un axe (3) de mâchoire (30) sensiblement perpendiculaire à la paroi amont (33) et dont les dimensions sont agencées de manière à permettre l'insertion de l'alésage (31) sur l'arbre (21) par coulissement selon un axe commun (4) défini lorsque l'axe (2) de pignon (20) et l'axe (3) de mâchoire (30) sont coaxiaux,
**caractérisé en ce qu'**il comporte des moyens d'indexage aptes à empêcher l'insertion de l'alésage (31) sur l'arbre (21) lorsque la mâchoire (30) n'est pas correctement positionnée en rotation selon l'axe commun (4) par rapport à l'arbre (21).

2. Dispositif (1) selon la revendication précédente, **caractérisé en ce que** les moyens d'indexage comportent une clavette (24) longitudinale s'étendant axialement sur le pignon (20) depuis une paroi aval (23) disposée à l'extrémité amont du pignon et sensiblement perpendiculaire à l'axe de pignon, la clavette étant agencée de manière à coopérer avec une rainure (34) axiale portée par la mâchoire (30) et débouchant sur la paroi amont (33).

3. Dispositif (1) selon l'une quelconque des revendications précédentes, **caractérisé en ce qu'**il comporte des moyens de mise et de maintien en position axiale de la mâchoire (30) sur le pignon (20), ces moyens comprenant :
- une encoche (25) portée par le pignon (20) et s'étendant perpendiculairement à l'axe (2) de pignon 20,
- un trou (35) disposé sur la mâchoire (30), perpendiculairement à l'axe (3) de mâchoire (30), agencé de manière à ce que, dans une position relative de référence du pignon (20) par rapport à la mâchoire (30), le trou (35) soit au regard de l'encoche (25),
- une vis (50) ou une goupille traversant le trou (35) et l'encoche (25) dans la position de référence, de manière à former une butée double effet en translation selon l'axe principal.

4. Dispositif (1) selon la revendication précédente, **caractérisé en ce que** l'encoche (25) forme une gorge annulaire.

5. Dispositif (1) selon l'une quelconque des revendications précédentes, **caractérisé en ce qu'**il comporte des moyens de mise et de maintien en position axiale comprenant un épaulement (26) formé sur le pignon (20) et destiné à coopérer avec la paroi amont (33) de manière à former une butée simple en translation selon l'axe principal.

6. Dispositif (1) selon l'une quelconque des revendications précédentes, **caractérisé en ce qu'**il comporte des premiers et des seconds moyens de transmission dé couple disposés respectivement sur le pignon (20) et la mâchoire (30), et destinés à coopérer entre eux pour transmettre un couple selon l'axe commun (4) entre la mâchoire (30) et le pignon (20).

7. Dispositif (1) selon la revendication précédente, **caractérisé en ce que** les premiers et les seconds moyens de transmission de couple comportent des profils portant des cannelures complémentaires s'étendant respectivement selon l'axe (2) de pignon (20) et selon l'axe de (3) mâchoire (30).

8. Dispositif (1) selon la revendication 6, **caractérisé en ce que** les premiers et seconds moyens de transmission d'un couple comportent respectivement au moins un méplat porté par l'arbre (21) et au moins une paroi plane formée dans l'alésage (31), le méplat et la paroi plane étant disposés en regard lorsque la mâchoire (30) et l'alésage (31) sont dans une position relative de référence.

9. Dispositif (1) selon l'une quelconque des revendications précédentes, **caractérisé en ce que** la clavette 24 est rapportée sur le pignon (20) ou est venue de matière sur le pignon (20).

10. Procédé d'assemblage d'un dispositif (1) de liaison selon la revendication 1 dans lequel:
- on dispose sur un axe commun (4) l'axe (2) de pignon (20) et l'axe (3) de mâchoire (30),
- on insère par coulissement selon l'axe commun (4) l'alésage (31) sur l'arbre (21),
- **caractérisé en ce que** préalablement à l'insertion par coulissement selon l'axe commun (4) de l'alésage (31) sur l'arbre (21), on oriente en rotation autour de l'axe principal la mâchoire (30) de manière à positionner la rainure (34) au regard de la clavette (24).

## Claims

1. Device (1) providing the linkage between steering control means and a steering box for a vehicle steering system comprising:
- a pinion (20) associated with the steering box and comprising:
- a shaft (21) defining a pinion axis (20),
- a yoke (30) associated with the steering member and comprising:
- an upstream wall (33),
- a bore (31) defining a yoke (30) axis (3) substantially perpendicular to the upstream wall (33) and of which the dimensions are designed so as to allow the bore (31) to be inserted over the shaft (21) by sliding along a common axis (4) that is defined when the pinion (20) axis (2) and the yoke (30) axis (3) are coaxial,
**characterized in that** it comprises indexing means capable of preventing the bore (31) from being inserted over the shaft (21) when the yoke (30) is not correctly positioned with respect to the shaft (21) in terms of rotation about the common axis (4).

2. Device (1) according to the preceding claim, **characterized in that** the indexing means comprise a longitudinal key (24) extending axially along the pinion (20) from a downstream wall (23) positioned at the upstream end of the pinion and substantially perpendicular to the pinion axis, the key being designed to collaborate with an axial keyway (34) borne by the yoke (30) and opening on to the upstream wall (33).

3. Device (1) according to either of the preceding claims, **characterized in that** it comprises means for setting and maintaining the axial position of the yoke (30) on the pinion (20), these means comprising:
- a cutout (25) in the pinion (20) and extending perpendicular to the pinion 20 axis (2),
- a hole (35) positioned on the yoke (30) perpendicular to the yoke (30) axis (3) and designed so that when the pinion (20) is in a reference relative position with respect to the yoke (30), the hole (35) is aligned with the cutout (25),
- a screw (50) or a pin that passes through the hole (35) and the cutout (25) in the reference position so as to form a double-action end stop for translational movement along the main axis.

4. Device (1) according to the preceding claim, **characterized in that** the cutout (25) forms an annular groove.

5. Device (1) according to any one of the preceding claims, **characterized in that** it comprises means for setting and maintaining the axial position, these means comprising a shoulder (26) formed on the pinion (20) and intended to collaborate with the upstream wall (33) so as to form a single-acting end stop for translational movement along the main axis.

6. Device (1) according to any one of the preceding claims, **characterized in that** it comprises first and second torque-transmitting means positioned respectively on the pinion (20) and on the yoke (30) and intended to collaborate with one another in order to transmit torque about the common axis (4) between the yoke (30) and the pinion (20).

7. Device (1) according to the preceding claim, **characterized in that** the first and second torque transmitting means comprise profiles bearing complementary splines extending along the pinion (20) axis (2) and along the yoke (30) axis (3) respectively.

8. Device (1) according to Claim 6, **characterized in that** the first and second torque transmitting means comprise, respectively, at least one flat borne by the shaft (21) and at least one flat wall formed in the bore (31), the flat and the flat wall being positioned facing one another when the yoke (30) and the bore (31) are in a reference relative position.

9. Device (1) according to any one of the preceding claims, **characterized in that** the key 24 is attached to the pinion (20) or formed as an integral part of the pinion (20).

10. Method of assembling a linkage device (1) according to Claim 1, in which:
- the pinion (20) axis (2) and the yoke (30) axis (3) are positioned on a common axis (4),
- the bore (31) is inserted over the shaft (21) by sliding along the common axis (4),
- **characterized in that**, prior to inserting the bore (31) over the shaft (21) by sliding along the common axis (4), the yoke (30) is orientated in terms of rotation about the main axis so as to position the keyway (34) in alignment with the key (24).

## Patentansprüche

1. Verbindungsvorrichtung (1) zwischen Lenksteuereinrichtungen und einem Lenkgehäuse für ein Lenksystem eines Fahrzeugs, die aufweist:
- ein dem Lenkgehäuse zugeordnetes Ritzel (20), das enthält:
- eine eine Ritzelachse (20) definierende Welle (21),
- eine dem Lenkorgan zugeordnete Spannbacke (30), die aufweist:
- eine vordere Wand (33),
- eine Bohrung (31), die eine Achse (3) der Spannbacke (30) definiert, die im Wesentlichen lotrecht zur vorderen Wand (33) liegt und deren Abmessungen so gestaltet sind, dass sie das Einfügen der Bohrung (31) auf die Welle (21) durch Verschieben entlang einer gemeinsamen Achse (4) erlauben, die definiert ist, wenn die Achse (2) des Ritzels (20) und die Achse (3) der Spannbacke (30) koaxial sind,
**dadurch gekennzeichnet, dass** sie Indexiereinrichtungen aufweist, die das Einfügen der Bohrung (31) auf die Welle (21) verhindern können, wenn die Spannbacke (30) nicht gemäß der gemeinsamen Achse (4) bezüglich der Welle (21) korrekt in Drehung positioniert ist.

2. Vorrichtung (1) nach dem vorhergehenden Anspruch, **dadurch gekennzeichnet, dass** die Indexiereinrichtungen einen Längskeil (24) aufweisen, der sich ausgehend von einer hinteren Wand (23) axial auf dem Ritzel (20) erstreckt, die am vorderen Ende des Ritzels angeordnet und zur Ritzelachse im Wesentlichen lotrecht ist, wobei der Keil so gestaltet ist, dass er mit einem axialen Schlitz (34) zusammenwirkt, der von der Spannbacke (30) getragen wird und an der vorderen Wand (33) mündet.

3. Vorrichtung (1) nach einem der vorhergehenden Ansprüche, **dadurch gekennzeichnet, dass** sie Einrichtungen zum Anordnen und Halten der Spannbacke (30) in axialer Stellung auf dem Ritzel (20) aufweist, wobei diese Einrichtungen enthalten:
- eine Kerbe (25), die vom Ritzel (20) getragen wird und sich lotrecht zur Achse (2) des Ritzels (20) erstreckt,
- ein Loch (35), das auf der Spannbacke (30) lotrecht zur Achse (3) der Spannbacke (30) angeordnet und so gestaltet ist, dass in einer gegenseitigen Bezugsstellung des Ritzels (20) und der Spannbacke (30) das Loch (35) sich gegenüber der Kerbe (25) befindet,
- eine Schraube (50) oder Stift, die das Loch (35) und die Kerbe (25) in der Bezugsstellung durchquert, um einen doppeltwirkenden Anschlag in Translationsrichtung gemäß der Hauptachse zu bilden.

4. Vorrichtung (1) nach dem vorhergehenden Anspruch, **dadurch gekennzeichnet, dass** die Kerbe (25) eine Ringnut bildet.

5. Vorrichtung (1) nach einem der vorhergehenden Ansprüche, **dadurch gekennzeichnet, dass** sie Einrichtungen zum Anordnen und Halten in axialer Stellung aufweist, die eine Schulter (26) enthalten, die auf dem Ritzel (20) geformt und dazu bestimmt ist, mit der vorderen Wand (33) zusammenzuwirken, um einen einfachen Translationsanschlag gemäß der Hauptachse zu bilden.

6. Vorrichtung (1) nach einem der vorhergehenden Ansprüche, **dadurch gekennzeichnet, dass** sie erste und zweite Drehmoment-Übertragungseinrichtungen aufweist, die auf dem Ritzel (20) bzw. der Spannbacke (30) angeordnet und dazu bestimmt sind, zusammenzuwirken, um ein Drehmoment gemäß der gemeinsamen Achse (4) zwischen der Spannbacke (30) und dem Ritzel (20) zu übertragen.

7. Vorrichtung (1) nach dem vorhergehenden Anspruch, **dadurch gekennzeichnet, dass** das die ersten und zweiten Drehmoment-Übertragungseinrichtungen Profile aufweisen, die komplementäre Rillen tragen, die sich gemäß der Achse (2) des Ritzels (20) bzw. gemäß der Achse (3) der Spannbacke (30) erstrecken.

8. Vorrichtung (1) nach Anspruch 6, **dadurch gekennzeichnet, dass** die ersten und zweiten Drehmoment-Übertragungseinrichtungen mindestens eine von der Welle (21) getragene Abflachung bzw. mindestens eine ebene Wand aufweisen, die in der Bohrung (31) geformt ist, wobei die Abflachung und die ebene Wand einander gegenüber angeordnet sind, wenn die Spannbacke (30) und die Bohrung (31) in einer gegenseitigen Bezugsstellung sind.

9. Vorrichtung (1) nach einem der vorhergehenden Ansprüche, **dadurch gekennzeichnet, dass** der Keil (24) auf das Ritzel (20) aufgesetzt ist oder aus dem gleichen Material wie das Ritzel (20) besteht.

10. Verfahren zum Zusammenbau einer Verbindungsvorrichtung (1) nach Anspruch 1, bei dem:
- die Achse (2) des Ritzels (20) und die Achse (3) der Spannbacke (30) auf einer gemeinsamen Achse (4) angeordnet werden,
- die Bohrung (31) durch Verschieben entlang der gemeinsamen Achse (4) auf die Welle (21) eingefügt wird,
**dadurch gekennzeichnet, dass** vor dem Einfügen der Bohrung (31) auf die Welle (21) durch Verschieben entlang der gemeinsamen Achse (4) die Spannbacke (30) so in Drehung um die Hauptachse ausgerichtet wird, dass der Schlitz (34) gegenüber dem Keil (24) angeordnet ist.
